# EUROPEAN PATENT APPLICATION

(11) **EP 0 569 128 A2**
(43) Date of publication of application: **10.11.1993**
(21) Application number: 93302638.7
(22) Date of filing: 02.04.1993
(51) Int. Cl.: G06F 11/26

(54) **Extended high-speed testing of microprocessor-based devices**

(30) Priority: 08.05.1992 US 880615
(71) Applicant: JOHN FLUKE MFG. CO., INC., Everett Washington 98206-9090 (US)
(72) Inventor: Moore, Matthew P., Bellevue, Washington 98008 (US)
(74) Representative: Burke, Steven David

(57) **Abstract**

It is both desirable and practical to provide direct access by a microprocessor-based unit under test to control registers and/or status latches of emulated peripheral circuitry, ports or devices which are connected to the unit under test by a memory emulation test apparatus. Such access is provided in a simple manner and with a minimum of hardware added to the ROM emulator of the memory emulation test apparatus. A bus controller is provided to control read and write operations from emulated control registers and status latch to the memory emulator and/or the input/output module of the memory emulation tester apparatus over a data bus. The bus controller is selectively operated to accumulate addresses and to cause read and write operations in response to read operations requested for predetermined areas of an address space by the microprocessor of the unit under test. By providing direct access to peripheral devices and ports, the visibility of the periphery of the unit under test is improved and processing overhead of the memory emulation test apparatus is reduced, resulting in more extensive testing which can be carried out at the full speed of the microprocessor of the unit under test. Performing the test routine through the microprocessor of the unit under test thus greatly increases speed of execution of the test procedure.

## Description

### BACKGROUND OF THE INVENTION

### Field of the Invention

The present invention generally relates to the testing of microprocessor-based devices and, more particularly, to the testing of microprocessor devices in which the microprocessor is used to control additional circuitry or devices.

### Description of the Prior Art

In recent years, there has been a proliferation of products which include an electronic microprocessor. Such devices include, but are not limited to, many types of consumer electronics and appliances which use microprocessors to simplify and/or automate control sequences within the device. Such widespread use of microprocessors and the complexity of the microprocessors and associated circuitry has required the provision of automated testing of microprocessor-based devices.

Such automated testing has generally taken one of two forms, each of which emulates a portion of the unit under test (UUT) associated with the microprocessor. U. S. Patent 4,455,654, to Bhaskar et al. and assigned to the assignee of the present application, is exemplary of so-called microprocessor emulation where the test apparatus is connected to the UUT through the microprocessor socket after the microprocessor has been removed or disabled. Microprocessor emulation allows effective testing of the UUT at relatively high speed but requires a high speed processor to execute complex programs in order to emulate the microprocessor for which the tester is substituted. Therefore, microprocessor emulation testers are extremely expensive. Further, in such an arrangement, the microprocessor is not tested together with its operating environment in the UUT.

A less expensive alternative to microprocessor emulation is so-called memory emulation or ROM-based emulative testing. U. S. patents 4,868,822, to Scott et al., 4,958,347, to White et al., 4,989,207, to Polstra, and 5,068,852 to Locke, all assigned to the assignee of the present invention, are exemplary of the memory emulation testing approach. In memory emulation testing, the boot read-only-memory (ROM), which must be provided for the microprocessor, is replaced with so-called ROM modules of the test system. This substitution of the test system for the boot ROM associated with the microprocessor allows the test system to control the microprocessor and the UUT by putting instructions into the ROM modules and causing the microprocessor to execute them as if the instruction were provided by the microprocessor's own boot ROM. This provides a relatively simple and inexpensive way to gain control of the UUT to execute testing routines. Relatively high test coverage can also be achieved through the provision of suitable input/output interfaces to the test equipment operator.

Memory emulation testing is, however, relatively slow even though the microprocessor is made to function at its full operational speed during each test operation. For example, a command to write data to a given location in the microprocessor's address space may be executed in, say, one microsecond. However, the test system as a whole may require a time period on the order of 1000 microseconds to complete the entire test step. This additional time is required for the computing overhead required in the test system to establish a command code and appropriate command arguments in the correct portions of the ROM modules so that they can be found, decoded and executed by the microprocessor of the UUT which is made to repetitively read certain locations in its boot address space. After the command is executed, information must then be passed back from the UUT to the test system by UUT read operations from particular ranges in the boot ROM address space. Further, special programs must be run in both the UUT and the test system to perform the "handshaking" which is required to ensure that the command is correctly executed and to maintain control of the UUT microprocessor.

Memory emulation testing is not necessarily limited to a one instruction per test format although such simple instructions are often used for low level go/no go tests or for data bus and address bus diagnostics and the like. Much more extensive programs can be set up in the ROM modules of the test system and run by the UUT microprocessor at the full speed of the microprocessor. However, such more extensive programs do not provide a complete solution to increasing speed or coverage of UUT testing since the ROM modules of the emulation memory must still be frequently reconfigured. This is because the circuitry surrounding the microprocessor on a typical UUT cannot provide complete, closed signal paths from the microprocessor, out to the circuitry, and back to the microprocessor for more than a small minority of all of the circuitry on the UUT. Thus, the paths must be established through the test system. The test system must interleave operations directed by ROM emulation with operations on other devices such as input and output ports or peripheral device emulators.

Therefore, to obtain visibility and control of the circuitry in the UUT, the operational overhead of the test system must be accepted because a test program must be run on the test system in order to obtain and maintain control of the UUT. The memory emulation function of the test system effectively provides access to the "center" of the UUT at the UUT microprocessor and the test devices emulated by the test system provides access to the "edge" of the UUT. The program running on the test system must then coordinate information from all of the test devices which are emulated in order to test the UUT. Consequently, as a practical matter because of the computing overhead of the test program, the execution of test procedures has been limited to a very small percentage, commonly less than 1%, of the potential testing speed based on the execution speed of the UUT microprocessor.

### SUMMARY OF THE INVENTION

It is therefore an object of the present invention to provide an arrangement for reducing data processing overhead in a memory emulation test apparatus.

It is another object of the invention to provide direct access of a microprocessor in a unit under test to peripheral devices and ports to which the unit under test is connected.

It is a further object of the invention to provide an increased coverage of testing of a microprocessor-based unit under test.

It is yet another object of the invention to provide increased speed of execution of a programmed test routine.

In order to accomplish these and other objects of the invention, a method of testing a microprocessor-based device by memory emulation is provided, including the step of directly accessing at least one of an emulated peripheral or controllable device of a test system from the microprocessor-based device.

In accordance with another aspect of the invention, a memory emulation test apparatus is provided including at least a tester devices bus, a memory emulator means for providing an input to a microprocessor of a microprocessor-based unit under test, an emulated control register means, and means for controlling writing of data to the tester devices bus from the emulated control register means and reading the data from the tester devices bus to the microprocessor of a microprocessor-based unit under test.

In accordance with a further aspect of the invention, a memory emulator is provided for a memory emulation test apparatus including a test processor, said memory emulator including a bus controller means for controlling a data bus in the memory emulation test apparatus to at least perform a read operation from the tester devices bus, and means for controlling transfer of data read from the data bus to a microprocessor of a unit under test.

### BRIEF DESCRIPTION OF THE DRAWINGS

The foregoing and other objects, aspects and advantages will be better understood from the following detailed description of a preferred embodiment of the invention with reference to the drawings, in which:
Figure 1 is a schematic diagram of an architecture of a memory emulation tester with which the invention may be employed,
Figure 2 schematically illustrates a data structure which is suitable to the practice of the invention,
Figure 3 is a schematic diagram of a ROM emulator in accordance with the invention and which may be used within the test system architecture of Figure 1, and
Figure 4 is an alternative test system architecture with which the invention may be employed.

### DETAILED DESCRIPTION OF A PREFERRED EMBODIMENT OF THE INVENTION

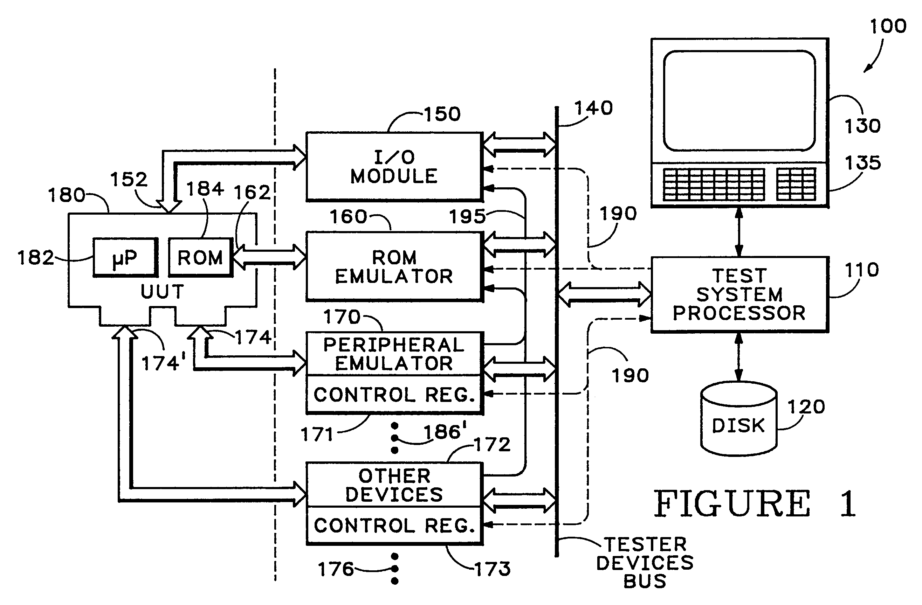

Referring now to the drawings, and more particularly to Figure 1, there is schematically shown an exemplary architecture of a memory emulation test system 100 with which the invention may be employed as connected with a unit under test (UUT) 180. It is to be understood that the architecture illustrated is specifically not admitted to be prior art as to the present invention but is provided for the purpose of conveying an understanding of the function of the invention and the relationship of the invention to memory emulation test systems which may be known in the art. As will be discussed in more detail below, a particular advantage of the present invention is that it can be retrofit into or be otherwise implemented as an extension to other test systems to greatly increase the operational speed thereof.

The memory emulation test system includes a data processor 110 programmed with a testing routine as the core of the test system. Test system processor communicates directly with a mass data store 120, such as a disk, for running the test program and collecting and analyzing data collected from the UUT during the automated testing process. The processor 110 also communicates with operator terminal 130, including keyboard 135, through which the operator can control the performance of the testing operations under automated control of the processor 110. The results of the testing routine are also displayed to the operator on the screen of the terminal 130, typically after analysis. The details of the test data, the analysis thereof, if any, the interaction of the operator and terminal 130 are not critical to the practice of the invention since the invention is concerned principally with the increase of speed of performance of a test routine on the UUT. Therefore, the invention is compatible with any further data processing for fault analysis which may be provided by the test system.

The interface of the test system to the UUT is provided by tester devices bus 140, input/output (I/O) module 150, ROM emulator 160, peripheral emulator 170 and one or more further emulators of other devices 172. For convenience, these elements of the interface to the UUT, while considered to be part of the tester, are preferably packaged in a separate housing or pod with cables emanating therefrom for attachment to the UUT. As is known in the art, the ROM emulator 160 is substituted for the UUT ROM 184 by replacement or by disabling the UUT ROM and making parallel connections to the ROM emulator 160, which contains and controls access to the ROM modules. The I/O module connects to the UUT by paralleling the I/O connections used when the UUT is in normal operation. These connections 152 are commonly made by so-called "pogo pins" which are a common item of electrical hardware. However, any other technique of producing reliable connections can be used. Similarly, since the UUT, as tested is commonly a card containing the microprocessor 182 and ROM 184 and possibly other circuitry and would communicate with other peripherals and device controllers on other cards, these connections are shown at 174 and 174' as card edge connectors but other connection techniques could also be employed.

As indicated by dots 176 and 176', known memory emulation systems must emulate a plurality of peripherals and other devices in order to more completely test the UUT, as indicated above. The number of such devices which must be emulated at any given time in available test systems is basically determined in accordance with economic considerations between hardware and data processing overhead, but is, in any event, limited by the ability of the UUT 180 to communicate with the test system 110 through the ROM emulator 160. Therefore, as indicated above, known memory emulation test systems must reconfigure these emulated devices frequently as the test program is executed. Perhaps more importantly to the overall execution speed of the test program, these peripherals 170 and devices 172 must be separately interrogated by the test system prior to the initiation of the next step or small group of steps of the test program, communicated to the UUT 180 from the test system processor 110 over tester devices bus 140 and through I/O module 150 and ROM emulator 160. Therefore, in known memory emulation testing systems, the test system processor is interposed in every communication from and to the UUT and typically requiring a large number of processing steps. This communication, indicated by dashed line curved arrows 190, is required for each operation or small group of operations performed as part of the automated test routine.

In contrast, the invention is characterized by direct communication from the UUT 180, through the ROM emulator 140, to the peripherals 170, devices 172 and the I/O module 150 directly over tester devices bus 140, as indicated by solid line curved arrows 195. By providing this direct communication over a link that is substantially a hardware connection, no "handshaking" is required to maintain control of the UUT by the test system processor. In fact, for relatively long sequences of the test program routine, it is substantially irrelevant whether the test system has control over the UUT or not. In other words, the test system could be considered to have control over the UUT while the UUT is autonomously executing the portion of the test program supplied through ROM emulator 160 by the test system processor, but, nevertheless, the UUT processor is autonomously executing that program portion at its full processing speed. On the other hand, at he same time, it could also be considered that the UUT microprocessor, itself, had full control over the peripherals and devices attached to the tester devices bus and direct access thereto. Test data can be gathered in any number of ways such as by monitoring the tester devices bus 140 by the tester system or by UUT microprocessor writes to memory or I/O module 150 which can then be dumped, as a group or batch, to the tester system memory 120.

It should also be noted that for expanded testing of the ability of the UUT microprocessor to control peripheral devices, it is only necessary to have access to the emulated control register 171, 173 or similarly located status latches at the address of the peripheral or device. Therefore, a large number of peripherals and/or devices can be emulated in accordance with the invention by merely emulating, or providing in hardware, a control register to receive a control code and the capacity to capture an address to which the control code is directed. Therefore, the invention provides the capacity to greatly reduce the number of operations necessary to emulate a large plurality of such devices and peripherals which would otherwise be contained in the test routine program and executed in the course thereof, further increasing the execution speed of the test routine.

To provide a simple analogy to the operation of the invention as contrasted with the prior art, consider the example of a microprocessor provided to control each of a plurality of light sources in response to each of a plurality of programmed instructions. The microprocessor provides a control code for either turning a particular light source on or off (or for dimming, flashing, etc.) and an address of the controller which is to execute that control code and actually operated the light source. In known memory emulation test systems, the tester system processor would have to monitor each of a plurality of addresses for receipt of the control code and then evaluate the control code to determine whether or not the correct control code was received. These monitoring and evaluation processes, at least to the extent of capture of the control code, would have to be completed before execution of the next test step or operation to maintain synchronism and correspondence between the test executed and the data captured. In other words, the test system itself was required to provide emulated "sensors" (e.g. an input) to receive the control code and address from the microprocessor. In contrast, the invention effectively provides such "sensors" for the UUT (even though the direct communication link is physically within the tester or pod) by allowing the control signals to be communicated directly to (e.g. accessed by) the UUT, itself, over the tester devices bus 140 and ROM emulator 160, to the I/O module 150. Data comparison can then be done in the UUT and significant (e.g. error) data collected by providing for such as operation in the test routine loaded from the tester system 110 through the ROM emulator 160. During the execution of what may now be fairly long program sequences of the test program, the UUT may be operated at its full design speed. At the same time, data processing overhead in the tester system processor 110 which would slow execution of the test program is avoided since the UUT microprocessor is essentially operating autonomously.

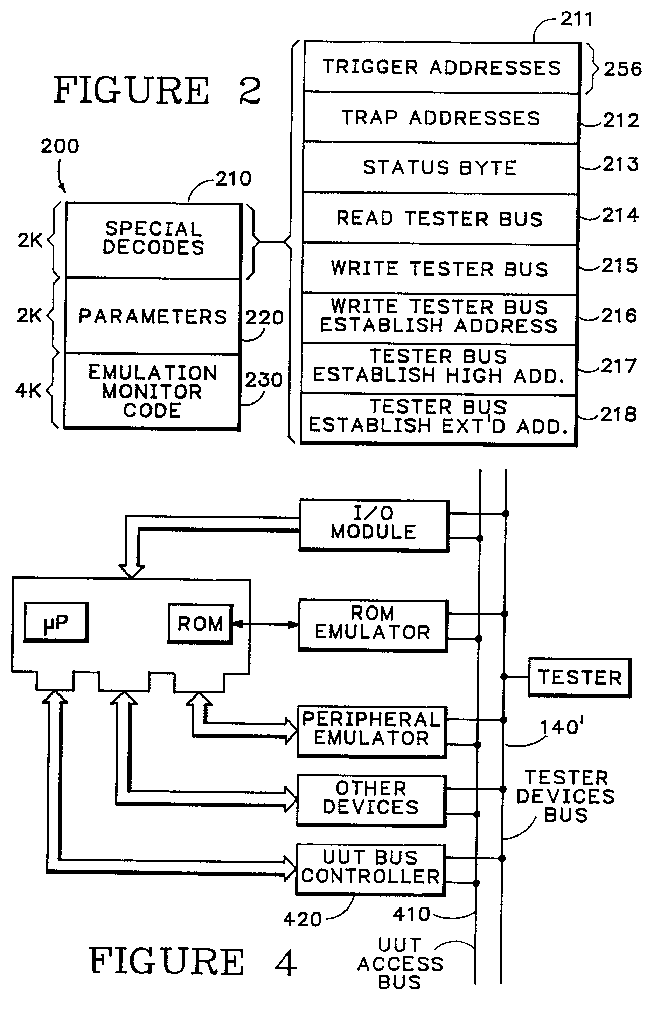

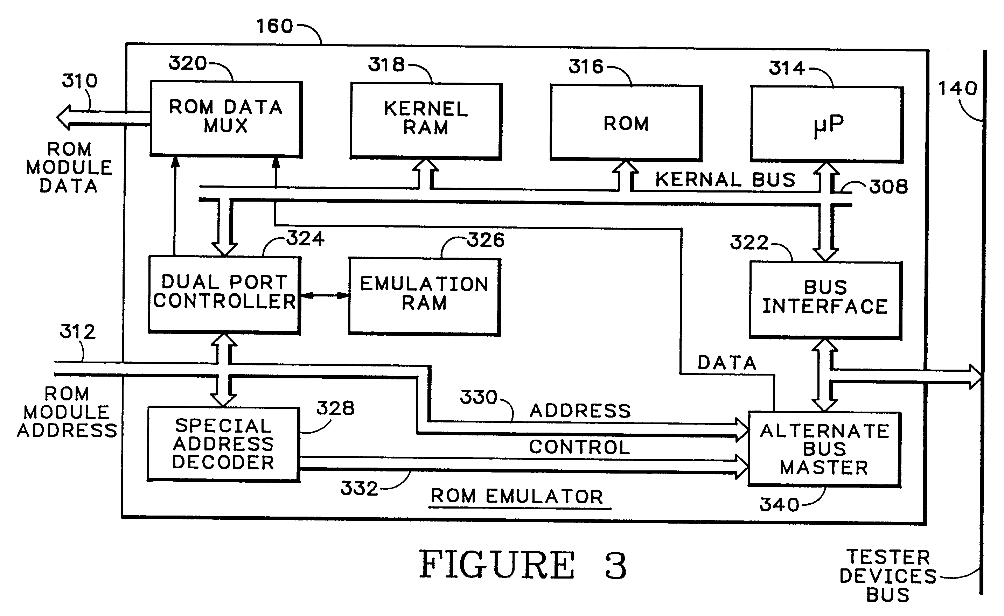

While the direct communication from peripherals 170 and devices 172 can be achieved in many ways, once the meritorious effects to be achieved thereby are recognized, in light of this discussion, a particularly simple implementation of the invention will now be disclosed with reference to Figures 2 and 3. In particular, the following discussion of an implementation of the invention is particularly applicable to a retrofit of the invention into an existing ROM emulation test system which includes ROM modules known as the Sigma Series ROM module, currently marketed by the assignee. The testing system including the Sigma Series ROM module is disclosed in detail in U. S. Patents 4,868,822, to Scott, and 4,691,316, to Phillips, both of which are hereby fully incorporated by reference.

Referring now to Figure 2, the Sigma Series ROM module includes a portion of ROM emulation memory of about 8 Kbytes in size which is partitioned into a special decodes section 210, a parameters section 220 and emulation monitor codes section 230. The particular size of each of these sections is not particularly important in the Sigma Series ROM module design or to the practice of the invention. Further, the functions of tee parameters and emulation monitor codes sections are the same as in the Sigma Series ROM module design and need not be discussed further. However, it is preferred in the practice of the invention to dedicate 2 Kbytes of memory to the special decodes section 210 and to articulate this section into eight areas 211 - 218 of 256 bytes each.

In accordance with the invention, when the UUT microprocessor executes a fetch from one of these areas a particular control function of the test system 100 is invoked. Specifically, if an address within address space 211 is read, it causes a trigger event on the tester devices bus 140. If an address within address space 212 is read, the lower eight bits of that address are taken as data passed from the UUT to the tester system. Similarly, if an address within address space 213 is read, that address is decoded to cause a read of a status latch by the UUT microprocessor.

In each of these cases the control is preferably achieved by ANDing particular binary states of the most significant bits of the address so that any address within that range will be similarly decoded or detected to cause a particular control function. Incidentally, the data actually read from the address in the ROM emulator in accordance with the presently preferred embodiment of the invention is arbitrary and is ignored by the UUT for reads of areas 211, 212 and 215 - 218 but could be used, if desired. Data read from an address in area 213, however, is sometimes used by the ROM emulator for sending control codes to the UUT. Data read from area 214 contains data read from the devices on the tester devices bus using the address which was previously established by reads from areas 216 - 218.

It is to be understood that areas 211, 212 and 213 are provided in the above-mentioned Sigma Series ROM module design which also provides the above-described tester control functions. In accordance with the invention, however, four or, preferably, five, or more additional areas and corresponding control functions are provided. Specifically, if an address within address space 214 is read, a read of the tester devices bus 140 is performed by ROM emulator 160 using the lower eight address lines as the address read from the bus. The address will preferably contain a device control code or a status from a status register of one of the I/O modules, emulated peripherals or devices. It should be noted that, in some applications with which the invention may be employed, this read from the tester devices bus must be done twice, for timing reasons, and the data from the second read utilized.

If an address within address space 215 is read, the lower eight (or other convenient number) of bits of that address is taken as data to be written to tester devices bus 140 from an emulated control register corresponding to an address of an I/O module 150, emulated peripheral 170 or device 172 is performed. A read from address space area 216 establishes the lower eight (or some other convenient number) of bits as the address to be written to the tester devices bus. A read from address space 217 establishes the lower eight (or other convenient number) bits of the address as the next higher group of bits of the address space to be used for tester devices bus operations. This increases the usable address space from 256 bytes to 64 Kbytes. Likewise, a read of any address in address space 218 causes the lower eight bits of the address to be established as the next higher group of bits of an address for tester devices bus operations, increasing the usable address space to 16 Mbytes, and so on, as or if needed. Therefore, it is seen that the data structure of Figure 2, particularly as it embodies address space areas 214 - 217, 218, etc., provides for signals sufficient to control a writing to or reading from the tester devices bus 140 for a range of addresses that can be as large as desired under direct control of the UUT microprocessor.

This writing to or reading from the tester devices bus 140 under the selective control of the data structure of Figure 2 may be accomplished by a relatively simple embodiment of a ROM emulator 160, in accordance with the invention, as illustrated schematically in Figure 3. It should be noted that the architecture of the ROM emulator 160 of Figure 3 is also a modification of current ROM emulators disclosed in the above-incorporated U. S. Patents to Scott and Phillips since it is desirable that some ROM emulation functions, such as for low-level kernel testing and bus diagnosis remain unchanged from currently commercially available memory emulation testers. However, as with Figure 1, no portion of Figure 3 is admitted to be prior art as to this invention since, while some conventional functional relationships are depicted, the specific architecture illustrated is shown in a form which is chosen solely in the interest of clarity of explanation of the invention.

As seen by the UUT microprocessor, ROM emulator 160 includes a multi-bit output 310 over which signals may be transmitted in parallel in response to address signals input from the UUT microprocessor at 312. Therefore, since particular data is output for each input address, the ROM emulator 160 merely appears as a read only memory to the UUT microprocessor. However, to allow control of the UUT through the ROM emulator, an emulation random access memory (RAM) 326 is provided together with a ROM data multiplexer 320, serving as an output means to control transmission to the UUT. In the simplest of memory emulation testers, address 312 could be applied directly to emulation RAM for read cycles. Data stored in the emulation RAM 326 could be changed at will by applying addresses directly from the tester system processor 110 of Figure 1 during write cycles.

However, in accordance with the invention, ROM emulator also include microprocessor 314 and associated ROM 316 and kernel RAM 318. These elements communicate with each other and with a bus interface 322 over a kernel bus 308. A dual port controller 324 is also connected to kernel bus 308 to provide read/write access to emulation RAM 326. The bus interface 322 provides communication between the test system processor 110 and the ROM emulator microprocessor over the tester devices bus 140. This bus interface is largely controlled by the tester processor 110 and, when only the tester system processor has direct access to emulated devices and peripherals, as in commercially available memory emulation testers, no other interface would be required, even if it were found advantageous to include microprocessor 314 in the ROM emulator 160 for some other purpose.

One preferred implementation of the invention includes an alternate bus master, although the function of this structure could be embodied within microprocessor 314 and additional I/O circuitry and control of bus interface circuitry (not shown) provided. This alternative bus master is a collection of circuits which can initiate a read or write operation on the tester device bus in response to a control signal 332 from a special address decoder 328, synchronized with access by test processor 110. The special address decoder is, in turn, responsive to a read operation at an address in one of the areas of address space discussed above in regard to Figure 2. The alternate bus master also preferably includes a plurality of selectable registers for the accumulation of groups of address bits as areas 216, 217, 218, etc., are accessed. However, the actual circuitry could be constructed in many ways which will be apparent to those skilled in the art in view of this functional description. If, for example, accesses to addresses within one of the address space areas 211 - 218 were done by ANDing particular binary values of the most significant bits of the address applied to address space 210, one AND gate output would directly enable one of three or more registers arranged to store a group of bits comprising a portion of a composite address. The outputs of two other AND gates would directly control the tester device bus read or write operation, respectively, at the composite address or an address specified by the lower (eight) bits of the address. Other special decodes do not involve direct access of the UUT to the emulated devices or peripherals and are not important to an understanding of the improvement of a tester as provided by this invention.

Data returned to ROM emulator 160 in response to a write or a read on tester devices bus 140 may be captured by alternate bus master 340 and directly passed to ROM data multiplexer 320 for transmission to the UUT. Since this data is the data received by the control register or status latch (e.g. 171 of Figure 1) of the I/O module emulated device or peripheral, this data need not be stored in the ROM emulator. Alternatively, the same data can be returned to the UUT microprocessor through I/O module 150. In practice, both are often used as may be convenient for the particular test routine steps being performed. Therefore, some further simplification of the test routine is also made possible. Upon execution of a comparison by the UUT microprocessor, appropriate data can be stored for output or output directly to the test system in the usual manner. Alternatively, the tester devices bus could be independently monitored and data collected directly therefrom without interference with the execution of the test routine by the UUT microprocessor.

Therefore, it is seen than only three logic circuits (or perhaps a few more to increase accessible address space) forming a decoder and one register (or a corresponding few more registers) are necessary in addition to normal bus controlling circuitry in order to achieve direct access of the UUT to emulated peripherals and other devices and a substantial speed increase in the execution of a test program. In a preferred form of the invention, five logic circuits are provided and three registers are utilized to access an address space of 16 Mbytes. Further, the difficulty and complexity of peripheral and device emulation is largely eliminated since it is only necessary to capture control signals and the addresses to which they are directed, allowing a great many peripherals and devices to be simultaneously emulated insofar as required for testing of the UUT. The visibility of the "edges" of the UUT is thus obtained without the requirement of tester system processor overhead which would slow the testing process. By the same token, the microprocessor of the UUT can be exercised at full operating speed within the UUT environment for relatively lengthy sequences of testing operations to render test conditions more stringent or realistic as compared to normal operating conditions of the UUT by virtue of the communication link through the tester devices bus. This is effectively a hardware link controlled by the UUT and, hence, can be operated at hardware speeds.

Figure 4 shows an application of the present invention to an alternative tester system architecture which is considered to be advantageous in consideration of simplicity of implementation. Figure 4 is similar to Figure 1 except that two separate buses are provided, In this case tester devices bus 140' generally corresponds to tester devices bus 140 of Figure 1 except that direct UUT access communications are carried exclusively by OUT access bus 410. ROM emulator 160 can be constructed somewhat more simply in this case simply because arbitration and synchronization of access to tester devices bus 140 is no longer necessary. On the other hand, the I/O module 150 and peripherals and other devices 170, 172 must be made more complicated. When these elements are coupled to two buses, provision must be made for the possibility of simultaneous control commands on each of the buses to which each such element is connected

In view of the foregoing, it is seen that the provision of direct access of the UUT to emulated peripherals and devices in a memory emulation tester may be achieved simply and to great advantage in terms of testing routine execution speed and other considerations including test program complexity. The invention may be essentially constituted by a small number of logic circuits and registers or in any number of other ways which will be apparent to those skilled in the art in view of the foregoing discussion of the invention. The simplicity of the invention requires no major alteration of any portion of virtually any memory emulation tester and may be easily retrofit into existing systems by the provision or modification of the ROM emulator as described in connection with Figure 3.

While the invention has been described in terms of a single preferred embodiment and a variation thereof, those skilled in the art will recognize that the invention can be practiced with modification within the spirit and scope of the appended claims.

## Claims

1. A method of testing a microprocessor-based device by memory emulation, including the step of
directly accessing at least one of an emulated peripheral or controllable device of a test system from said microprocessor-based device.

2. A method as recited in claim 1, including the further steps of
writing data from said at least one of said peripheral and said controllable device to a tester devices bus and
reading data from said tester devices bus to said microprocessor-based device under test.

3. A method as recited in claim 2, wherein at least one of said writing and reading steps includes the steps of
establishing a predetermined number of bits of an address, said predetermined number being less than the number of bits comprising said address, and
subsequently establishing the remainder of the bits of said address to form a composite address.

4. A method as recited in claim 3, wherein at least one of said steps of establishing bits of an address is performed in response to a read operation of a predetermined area of memory.

5. A method as recited in claim 1, including the further steps of
establishing at least a portion of an address in response to a read operation in a predetermined area of memory, and
performing at least one of a writing operation to a bus and a reading operation from said bus at said address established, at least in part, by said establishing step and in response to a read operation in another predetermined area of memory.

6. A memory emulation test apparatus including at least
a tester devices bus,
a memory emulator means for providing an input to a microprocessor of a microprocessor-based unit under test,
an emulated control register means, and
means for controlling writing of data to said tester devices bus from said emulated control register means and reading said data from said tester devices bus to said microprocessor of a microprocessor-based unit under test.

7. A memory emulator for a memory emulation test apparatus including a test processor, said memory emulator including
a bus controller means for controlling a data bus in said memory emulation test apparatus to at least perform a read operation from said tester devices bus, and
means for controlling transfer of data read from said data bus to a microprocessor of a unit under test.

8. A memory emulator as recited in claim 7, further including
means for detecting a read operation at an address within a predetermined range of an address space for controlling said read operation of said bus controller means.

9. A memory emulator as recited in claim 8, wherein said means for detecting a read operation further includes means for controlling said bus controller means to perform a write operation to said data bus.

10. A memory emulator as recited in claim 9, wherein said means for detecting a read operation further includes means for controlling said bus controller means to establish a portion of an address for at least one of said read operation and said write operation.

11. A memory emulator as recited in claim 7, wherein said data bus is a tester devices bus and said bus controller means includes means for synchronizing access to said tester devices bus by said bus controller means with accesses to said tester devices bus by said test processor.

12. A memory emulator as recited in claim 7, further including
an output means connectable to a microprocessor in a unit under test and
means for communicating data read from said data bus to said output means.

13. A memory emulator as recited in claim 12, wherein said output means is a multiplexer.

14. A memory emulator as recited in claim 12, wherein said means for communicating data read from said data bus to said output mean includes a communication link from said bus controller to said output means.
